# EUROPÄISCHE PATENTANMELDUNG

(11) **EP 4 425 755 A1**
(43) Veröffentlichungstag der Anmeldung: **04.09.2024**
(21) Anmeldenummer: 23159927.5
(22) Anmeldetag: 03.03.2023
(51) Int. Cl.: H02K 1/276, H02K 11/20, H02K 11/25

(54) **ROTOR EINER PERMANENTERREGTEN SYNCHRONMASCHINE MIT AKTIVEM SCHUTZ VOR IRREVERSIBLER ENTMAGNETISIERUNG SEINER PERMANENTMAGNETE**

(71) Anmelder: Siemens Aktiengesellschaft, 80333 München (DE)
(72) Erfinder: Buschbeck, Jörg, 90482 Nürnberg (DE); Kirchner, Florian, 97705 Burkardroth (DE); Rettinger, Frank, 97616 Bad Neustadt (DE)
(74) Vertreter: Siemens Patent Attorneys

(57) **Zusammenfassung**

Die Erfindung betrifft einen Rotor (9) einer dynamoelektrischen Maschine (1) mit Permanentmagneten (14) mit einem magnetisch leitfähigen Grundkörper, insbesondere einem axial geschichteten Blechpaket (11), der in im Wesentlichen axial verlaufenden Ausnehmungen (13) zumindest abschnittsweise umfänglich und/oder axial Permanentmagnete (14) vorsieht, wobei ein oder mehrere Permanentmagnete (14) einen Pol (19) bilden, der einen Nordpol (N) oder Südpol (S) Richtung Außenumfang (18) des Rotors (9) ausbildet, wobei der leitfähige Grundkörper und die jeweiligen Permanentmagnete (14) Teil jeweils eines geschlossenen Magnetkreises (22) bilden, wobei in den Magnetkreisen (22) Mittel vorhanden sind, die in Magnetisierungsrichtung der Permanentmagnete (14) magnetisch in Serie angeordnet sind und die Permanentmagnete (14) vor Übertemperatur und damit vor irreversibler Entmagnetisierung schützen.

## Beschreibung

Die Erfindung betrifft einen Rotor einer dynamoelektrischen Maschine mit Permanentmagneten, insbesondere eine permanenterregte Synchronmaschine, einen Antrieb mit einer derartigen dynamoelektrischen Maschine, also auch ein Verfahren zum Betreiben dieses Antriebs.

Bei Rotoren dynamoelektrischer Maschinen mit Permanentmagneten, insbesondere permanenterregten Synchronmaschinen mit vergrabenen Permanentmagneten werden die Permanentmagnete in im Rotor vorhandene Taschen axial eingeschoben und ggf. durch Stege positioniert.

Diese Stege befinden sich bei bekannten Maschinenauslegungen auf der wellenseitigen Seite der Magnettasche, wie dies auch der US 9 531 226 B2 und US 2018/0248427 A1 zu entnehmen ist.

Bei der Dimensionierung und dem Betrieb von Permanentmagnet-Synchronmotoren müssen die zulässigen Arbeitstemperaturen der Permanentmagnete berücksichtigt werden, um diese vor einer irreversiblen Entmagnetisierung zu schützen. Gerade bei Einsatz der weitverbreiteten Seltenerd-Werkstoffe mit negativen Temperaturkoeffizienten Tk(HcJ) (z.B. NdFeB; NeodymEisenBor) fordert die Abnahme der Gegenfeldbelastbarkeit mit zunehmender Arbeitstemperatur zuverlässige und genaue Kenntnisse über den Betriebszustand und damit vor allem über die Temperatur des Motors.

Eine direkte und kontinuierliche Messung der Magnettemperatur ist aufgrund der Einbringung der Permanentmagnete in den rotierenden Teil des Motors, also den Rotor, nur in Ausnahmefällen wirtschaftlich und technisch sinnvoll realisierbar.

Rein rechenbasierte Modelle erfordern die Abbildung des Motormodells im Umrichter, wodurch mögliche Motor-Umrichter-Kombinationen, auch als Antrieb bezeichnet, in der Praxis stark eingeschränkt werden. Dies geschieht insbesondere dann, wenn z.B. unterschiedliche Hersteller von Motor und Umrichter kundenseitig zusammengeschaltet werden sollen.

Des Weiteren haben derartige thermischen Modelle aufgrund der Modellierungstiefe und der begrenzten Sensorik nur einen begrenzten Gültigkeitsbereich. Die Dimensionierung und der Betrieb des Motors müssen daher mit Rücksicht auf den ungenauen Kenntnisstand angepasst werden. Dies führt deshalb z.B. zu Auswahl höherwertigerer Magnetgüten der Permanentmagnete, und/oder zu höherer Materialeinsatz der Permanentmagnete und/oder zu einem verstärktem Kühlkonzept des Antriebs, oder ein eine Inkaufnahme einer vergleichsweise geringeren Motorausnutzung.

Neben den dadurch steigenden Kosten kann der Motor dennoch nicht zuverlässig vor irreversibler Entmagnetisierung im Zusammenhang mit hoher Arbeitstemperatur des Magnetmaterials geschützt werden.

Ausgehend davon liegt der Erfindung die Aufgabe zugrunde einen Rotor einer dynamoelektrischen Maschine, insbesondere einer permanenterregten Synchronmaschine zu schaffen, der seine Permanentmagnete vor allem zuverlässig vor irreversibler Entmagnetisierung u.a. bei hoher Arbeitstemperatur des Magnetmaterials im Betrieb der dynamoelektrischen Maschine schützt.

Des Weiteren soll ein Verfahren zur Vermeidung unzulässig hoher Strombelastung bei Übertemperatur bei einem Antrieb mit einer derartigen dynamoelektrischen Maschine vorgesehen werden. Dabei soll ein zuverlässiger Betrieb eines derartigen Antriebs bei unterschiedlichsten industriellen Anwendungen, somit auch bei außergewöhnlichen Betriebszuständen gewährleistet werden.

Die Lösung der gestellten Aufgabe gelingt durch einen Rotor einer dynamoelektrischen Maschine mit Permanentmagneten mit einem magnetisch leitfähigen Grundkörper, insbesondere einem axial geschichteten Blechpaket, der in im Wesentlichen axial verlaufenden Ausnehmungen zumindest abschnittsweise umfänglich und/oder axial Permanentmagnete vorsieht,
wobei ein oder mehrere Permanentmagnete einen Pol bilden, der einen Nordpol oder Südpol Richtung Außenumfang des Rotors ausbildet,
wobei der leitfähige Grundkörper und die jeweiligen Permanentmagnete Teil jeweils eines geschlossenen Magnetkreises bilden,
wobei in den Magnetkreisen Mittel vorhanden sind, die in Magnetisierungsrichtung der Permanentmagnete magnetisch in Serie angeordnet sind und die Permanentmagnete vor Übertemperatur und damit vor irreversibler Entmagnetisierung schützen.

Erfindungsgemäß wird durch die Mittel der Magnetkreis bzw. die Magnetkreise im Rotor bei Überschreiten einer definierten bzw. vorgebbaren Grenztemperatur der Materialien der Permanentmagneten stoffspezifisch beeinflusst.

Ein Magnetkreis ist dabei ein geschlossener Pfad eines magnetischen Flusses, der in unserem Fall durch einen oder mehrere Permanentmagnete und - im Betrieb der dynamoelektrischen Maschine - durch ein bestromtes Wicklungssystem gebildet wird.

Die Lösung der gestellten Aufgabe gelingt auch durch ein Verfahren zur Erfassung einer Grenztemperatur von Permanentmagneten eines mit Permanentmagneten versehenen Rotors einer dynamoelektrischen Maschine, insbesondere einer permanenterregten Synchronmaschine, die mittels eines Umrichters angetrieben wird, durch zumindest einen die folgenden Schritte:
- Erfassen einer Änderung der EMK, oder
- Erfassen der Änderung der Induktivitäten (dL/dt) der dynamoelektrischen Maschine durch ein geeignetes Verfahren, oder
- Erfassen des Unterschiedes zwischen erfasster Induktivität und im Umrichter hinterlegten Induktivität der dynamoelektrischen Maschine,
- um dann daraus weiterer temperaturreduzierende Aktionen, wie Stromreduktion, Lastreduktion oder Notabschalten der dynamoelektrischen Maschine und/oder Zuschalten eines Fremdlüfters einzuleiten.

Vorzugsweise tritt dabei bei Temperaturerhöhung Richtung Grenztemperatur des Permanentmagneten eine Erhöhung des magnetischen Widerstandes (Reluktanz) des Mittels auf. Dies führt zu einer Erhöhung des magnetischen Widerstandes (Reluktanz) eines Materials und einer damit verbundenen Begrenzung des magnetischen Flusses in den Magnetkreisen, was dadurch zu einer Begrenzung des magnetischen Flusses u.a. durch in den Permanentmagneten führt.

Ausgangspunkt bildet dabei der Einsatz eines Materials (z.B. CeFeB), dessen Curie-Temperatur im Bereich der maximalen Arbeitstemperatur des eingesetzten Permanentmagnetwerkstoffes liegt. Bei Betrieb unterhalb dieser Grenztemperatur weist der Werkstoff ein stark ferromagnetisches Magnetisierverhalten auf. Damit ist ein ordnungsgemäßer Betrieb der dynamoelektrischen Maschine und des Antriebs möglich.

Folgende Temperaturtermini sind dabei zu berücksichtigen. Curietemperatur ist die Temperatur, bei der ein jeweiliges Material einen Wechsel von Ferromagnetismus zu Paramagnetismus erfährt. Diese Temperatur wird in dieser Schrift auch als Grenztemperatur des "Mittels" oder kurz nur als Grenztemperatur bezeichnet.

Arbeitstemperatur ist die Temperatur, der u.a. die Permanentmagnete und der Rotor ausgesetzt sind.

Die Grenztemperatur des Permanentmagneten ist die maximale zulässige Arbeitstemperatur des Permanentmagneten, bei der keine irreversible Entmagnetisierung auftritt, wenn der Motor in einem Betriebszustand mit dem maximalen im Entwicklungsprozess vorgesehenen Gegenfeld belastet wird. Ein solcher Betriebszustand kann, je nach Anforderungen an den Motor z.B. eine hohe Überlast oder ein Fehlerfall (z.B. Stoßkurzschluss) sein.

Übertemperatur des Permanentmagneten bezeichnet eine Temperatur (größer als die Grenztemperatur des Permanentmagneten), ab welcher Permanentmagneten-Grenztemperatur eine irreversible Entmagnetisierung des Permanentmagneten eintritt, wenn die dynamoelektrische Maschine in einem Betriebszustand mit dem maximalen im Entwicklungsprozess vorgesehenen Gegenfeld belastet wird. Ein solcher Betriebszustand kann, je nach Anforderungen an diese Maschine, insbesondere bei einem Motor z.B. eine hohe Überlast oder ein Fehlerfall (z.B. Stoßkurzschluss) sein.

Das erfindungsgemäße Mittel, weist ein Material mit einer Curietemperatur auf, die kleiner als die Grenztemperatur der Permanentmagneten ist (also im Bereich der maximale zulässigen Arbeitstemperatur des Permanentmagneten liegt) und selbst einen reversiblen Wechsel von Ferromagnetismus zu Paramagnetismus bei dementsprechenden Temperaturwechseln aufweist.

Oberhalb der Material-Grenztemperatur (< als PM-Grenztemperatur) weist das Material einen Wechsel von ferromagnetischem zum paramagnetischen Materialverhalten auf. Dieser Grenzübergang ist dabei vorteilhafterweise ein reversibler Prozess, so dass die "normale" Funktionsweise/Betrieb der dynamoelektrischen Maschine bzw. des Antriebs unterhalb dieser Grenztemperatur nicht beeinträchtigt wird. Nach Überschreiten dieser Grenztemperatur und anschließendem Unterschreiten der Grenztemperatur stellt sich wieder das "normale" Verhalten ein.

Die Anordnung dieses Materials als Schicht findet im Magnetkreis statt und ist dabei so nah wie möglich und elektromagnetisch in Serie zum zu schützenden Permanentmagneten vorzusehen.

Vorzugsweise wird diese Schicht so nah wie möglich am Permanentmagneten positioniert. Dabei wird diese Schicht beispielsweise direkt am Permanentmagneten vorgesehenen. Also direkt auf der Nordpolseite und/oder der Südpolseite des Permanentmagneten.

Die Schicht ist in den jeweiligen Magnetkreisen des Rotors seriell zum Permanentmagneten angeordnet. Sie umfängt den Permanentmagneten somit zumindest soweit, dass Feldlinien des Magnetkreises durch die Schicht "müssen". Die Schichtdicke kann optional variieren und ist an den Kanten des Permanentmagneten tendenziell dicker ausgeführt als in der Mitte des Permanentmagneten.

Standardmäßig ist sie mit einer konstanten Dicke ausgeführt.

Diese erfindungsgemäße Schicht ist auch bei Permanentmagneten einsetzbar, die als Oberflächenmagnete am Außenumfang des Rotors angeordnet sind.

Als Material dieser Schicht sei beispielhaft das Magnetisierverhalten einer exemplarischen CeFeB-Legierung genannt, welche bei einer Curie-Temperatur von ca. 150°C den Übergang zum paramagnetischen Zustand aufweist und eine Koerzitivfeldstärke Hcj von 50kA/m bei 20°C und 20kA/m bei 120°C aufweist.

Der Permanentmagnet ist unter den normalen Betriebsbedingungen entmagnetisierungsfest ausgelegt und weist eine Curietemperatur auf, die deutlich über der Arbeitstemperatur liegt, typischerweise >300°C, aus der Materialklasse der Neodym-Eisen-Bor Magnete (NdFeB).

Durch die aktive Beeinflussung des Magnetkreises auf Grundlage des Einsatzes von Materialien mit speziellen Stoffeigenschaften, insbesondere der Ausnutzung der Curie-Temperatur, wird erfindungsgemäß sowohl ein reversibler Eigenschutz des Magnetkreises geschaffen als auch eine einfache Detektion der Grenztemperatur ermöglicht.

Dies wird dadurch erreicht, dass zunächst bei Erreichen der Grenztemperatur oder einer Temperatur größer der Grenztemperatur das Magnetfeld abgeschwächt wird.

Konkret wird die Gegenfeldbelastung der Permanentmagneten bei einem bestimmten Stromzustand reduziert, indem der magnetische Widerstand des Magnetkreises erhöht wird. Somit kann eine dynamoelektrische Maschine im Hinblick auf die Entmagnetisierungsfestigkeit entweder höhere Maximalströme führen oder aber bei gegebenem Maximalstrom erhöhte Temperaturen der Permanentmagnete zulassen. Also wird in einem ersten Schritt eine Schutzfunktion geschaffen. Die damit verbundene Änderung von Motorparametern (z.B. Induktivität oder Leerlauf-Spannung (EMK)) ermöglicht weiterhin eine Detektion der Übertemperatur (z.B. im Umrichter). Eine geeignete Detektion ist notwendig, um einen weiteren Temperaturanstieg durch geeignete Gegenmaßnahmen zu verhindern bzw. aktiv Maßnahmen zur Temperaturreduktion einzuleiten.

Mögliche Verfahren zur Detektion wären beispielsweise die Ermittlung der EMK Spannungsamplitude während des Betriebs oder die Ermittlung der d-Induktivität durch Testpulse oder Abweichungen von einem hinterlegten Flussmodell.

Damit greift die Regelung des Antriebs ein, indem sie die einspeisende Leistung in der dynamoelektrischen Maschine zurücknimmt oder eine und/oder Notabschalten aufgrund der Motorüberhitzung einleitet. Es muss auf jeden Fall sichergestellt sein, dass die Rotortemperatur zurückgeht.

Dies kann ggf. auch durch eine forcierte Kühlung des Motors mittels Fremdlüfter unterstützt werden.

Der beschriebene Vorgang schützt zum einen direkt das Magnetmaterial im Rotor durch Absenken des belastenden Gegenfeldes, erlaubt auf der anderen Seite über die feststellbare Beeinflussung von Betriebsgrößen des Motors (z.B. Strom) eine Erfassung der Temperaturüberschreitung durch einen entsprechenden Detektion-Algorithmus im speisenden Frequenzumrichter.

Insgesamt kann damit durch die Schutzschicht in den Magnetkreisen des Rotors eine höhere und sicherere Ausnutzung der eingesetzten Materialien und somit auch des Motors erzielt werden.

Zusätzlich zu dieser Schicht können Mittel zur Gegenfeldstabilität auf der dem Außenumfang des Rotors zugewandten Seite der Ausnehmungen besonders wirksam. Dort wirkt sich ein Entmagnetisierungsfeld, das gegebenenfalls durch einen Stoßkurzschlussstrom in einem Wicklungssystem eines Stators generiert wird, normalerweise besonders negativ aus. Dies kann durch Halteelemente oder Stege ausgeführt sind besonders reduziert werden. Zusätzlich wird durch die Stege auch die Positionierungsfunktion der Permanentmagnete in den Ausnehmungen übernommen werden.

Ein derartiges Gegenfeld kann sich beispielsweise durch einen Stoßkurzschlussstrom, andere Belastungszustände der permanenterregten Synchronmaschine, hohe Überlastmomente, Stromfehleinprägungen des Umrichters und diverse Kurzschlussfehler im Wicklungssystem ergeben.

Besonders gefährdet sind dabei exponierte Bereiche der Permanentmagnete, wie z.B. die Ecken der Permanentmagnete, da sie im Fehlerfall besonders hohen Gegenfeldern ausgesetzt ist. Dort würde es demnach als erstes zu irreversibler Entmagnetisierung der Permanentmagnete kommen, was durch die Halteelemente oder Stege auf der dem Außenumfang des Rotors zugewandten Seite der Ausnehmungen vermieden wird.

Vorteilhafterweise sind diese Stege, Haltelemente, Funktionshalteteile Teil des Dynamoblechs des Rotors und sind mit ihm einstückig ausgeführt. Dies wird beispielsweise durch einen Stanzvorgang gewährleistet.

Die Stoßkurzschlussfestigkeit der Maschine könnte auch durch vergleichsweise aufwändige und damit teure Verwendung von Magnetgüten mit hohem HcJ und/oder durch den Einsatz von dickeren Magneten erreicht werden.

Durch die Anordnung von Stegen und Funktionshaltestegen auf der luftspaltseitigen Seite der Tasche wird die Gegenfeldstabilität des Rotors signifikant erhöht. Die Stege und Funktionshaltestegen leiten die Gegenfelder sozusagen um die Ecken des Permanentmagneten und bewirken damit eine deutlich homogenere Belastung des Permanentmagneten im Fehlerfall. Die starken Feldüberhöhungen an den Ecken des Permanentmagneten werden erfindungsgemäß merklich zusätzlich zu der Schicht reduziert.

Die Dimensionierung der Stege ist derart ausgeführt, dass sie z.B. durch einen Stoßkurzschlussstrom und das daraus resultierende Entmagnetisierungsfeld und der damit ggf. eintretenden Sättigung der Stege die schützende Funktion für den Permanentmagneten weiter ausüben können. Mit anderen Worten: die schützende Funktion für den Permanentmagneten oder die Permanentmagneten wird unabhängig davon, ob der Steg, bzw. das Halteelement in Sättigung geht, ausgeübt.

In einer weiteren Ausführung sind die Stege bzw. Haltelemente an den Taschen nicht immer beidseitig ausgeführt, sondern können auch alternierend über die axiale Länge des Rotors betrachtet angeordnet sein. Die reicht auch für die Positionieraufgaben, da beispielsweise ein Permanentmagnet über die axiale Länge von zwanzig Blechen reicht, so dass die Haltelemente alternierend auch nur an jedem fünften Bleche bzw. Tasche vorhanden sein können. Entscheidend bei der Anzahl der Haltelemente ist dabei, ob die Gegenfeldstabilität durch die eingeschränkte Auswahl der Haltelemente auch mit den Schichten weiter im geforderten Umfang gegeben ist.

Der Rotor der permanenterregten Synchronmaschine weist Pole auf, wobei jeder Pol entweder nur eine Ausnehmung oder mehrere Ausnehmungen aufweist. Die Ausnehmungen können dabei z.B. in tangentialer Richtung angeordnet sein. Ebenso können sie in einer V-förmigen Anordnung oder Doppel-V-förmigen Anordnung oder einer U-Form oder einer W-Form oder einer Dachform ausgebildet sein.

Die Anordnung der Ausnehmungen bzw. der Permanentmagneten in den Polen des Rotors hängt vom Einsatzgrad der permanenterregten Synchronmaschine ab. Durch Flusskonzentration, wie dies z.B. bei V-förmigen Anordnung oder Doppel-V-förmigen Anordnung oder einer U-Form möglich ist, lassen sich höhere Luftspaltdichten des Magnetfeldes erreichen.

Eine Schrägung und/oder auch Staffelung des Rotors bzw. seiner Pole über die axiale Länge des Rotors betrachtet kann dabei weiterhin ausgeübt werden. Dies reduziert u.a. Rastmomente des permanenterregten Synchronmotors.

Als Anwendungen derartiger Rotoren in permanenterregten Synchronmaschinen sind vor allem in einem industriellen Umfeld wie bei Pumpen, Lüfter, Verdichter, Kompressoren, Rollgängen, Förderanlagen vorgesehen, die eine sehr lange kontinuierliche Betriebsdauer aufweisen. Ebenso ist deren Einsatz bei Traktionsantreiben wie Miningfahrzeugen, E-Bussen, Straßenbahnen oder Zügen vorstellbar.

Die Erfindung sowie weitere vorteilhafte Ausgestaltungen der Erfindung, wurden anhand schematisch dargestellter Ausführungsbeispiele näher erläutert; darin zeigen:
- FIG 1: einen prinzipiellen Längsschnitt eine dynamoelektrische Maschine,
- FIG 2: eine Detailansicht eines Querschnitts einer dynamoelektrischen Maschine,
- FIG 3 bis 23: Verlauf und Anordnung einer Schicht an Permanentmagneten eines Pols des Rotors,
- FIG 24: Prinzipdarstellung des Antriebs.

Es sei angemerkt, dass sich Begriffe wie "axial", "radial", "tangential" etc. auf die in der jeweiligen Figur bzw. im jeweils beschriebenen Beispiel zum Einsatz kommende Achse 6 beziehen. Mit anderen Worten beziehen sich die Richtungen axial, radial, tangential stets auf eine Achse 6 des Rotors 9 und damit auf die entsprechende Symmetrieachse des Stators 12. Dabei beschreibt "axial" eine Richtung parallel zur Achse 6, "radial" beschreibt eine Richtung orthogonal zur Achse 6, auf diese zu oder auch von ihr weg, und "tangential" ist eine Richtung, die in konstantem radialem Abstand zur Achse 6 und bei konstanter Axialposition kreisförmig um die Achse 6 herum gerichtet ist. Der Ausdruck "in Umfangsrichtung" ist mit "tangential" gleichzusetzen.

In Bezug auf eine Fläche, bspw. eine Querschnittsfläche, beschreiben die Begriffe "axial", "radial", "tangential" etc. die Orientierung des Normalenvektors der Fläche, d.h. desjenigen Vektors, der senkrecht auf der betroffenen Fläche steht.

Unter dem Ausdruck "koaxiale Bauteile", bspw. koaxiale Komponenten wie Rotor 9 und Stator 12, werden hier Bauteile verstanden, die gleiche Normalenvektoren aufweisen, für die also die von den koaxialen Bauteilen definierten Ebenen parallel zueinander sind. Des Weiteren soll der Ausdruck beinhalten, dass die Mittelpunkte koaxialer Bauteile auf der gleichen Rotationsachse bzw. Symmetrieachse liegen. Diese Mittelpunkte können jedoch auf dieser Achse ggf. an verschiedenen axialen Positionen liegen und die genannten Ebenen können damit also einen Abstand >0 voneinander haben. Der Ausdruck verlangt nicht zwangsläufig, dass koaxiale Bauteile den gleichen Radius haben.

Der Begriff "komplementär" meint im Zusammenhang mit zwei Komponenten, welche "komplementär" zueinander sind, dass ihre äußeren Formen derart ausgestaltet sind, dass die eine Komponente vorzugsweise vollständig in der zu ihr komplementären Komponente angeordnet werden kann, so dass sich die innere Oberfläche der einen Komponente und die äußere Oberfläche der anderen Komponente idealerweise lückenlos bzw. vollflächig berühren. Konsequenterweise ist also im Falle von zwei zueinander komplementären Gegenständen die äußere Form des einen Gegenstandes durch die äußere Form des anderen Gegenstandes festgelegt. Der Begriff "komplementär" könnte durch den Begriff "invers" ersetzt werden.

Der Übersichtlichkeit wegen werden in den Figuren teilweise in den Fällen, in denen Bauteile mehrfach vorhanden sind, häufig nicht sämtliche dargestellten Bauteile mit Bezugszeichen versehen.

Die beschriebenen Ausführungen können beliebig kombiniert werden. Ebenso sind auch Einzelmerkmale der jeweiligen Ausführungen kombinierbar, ohne das Wesen der Erfindung zu verlassen.

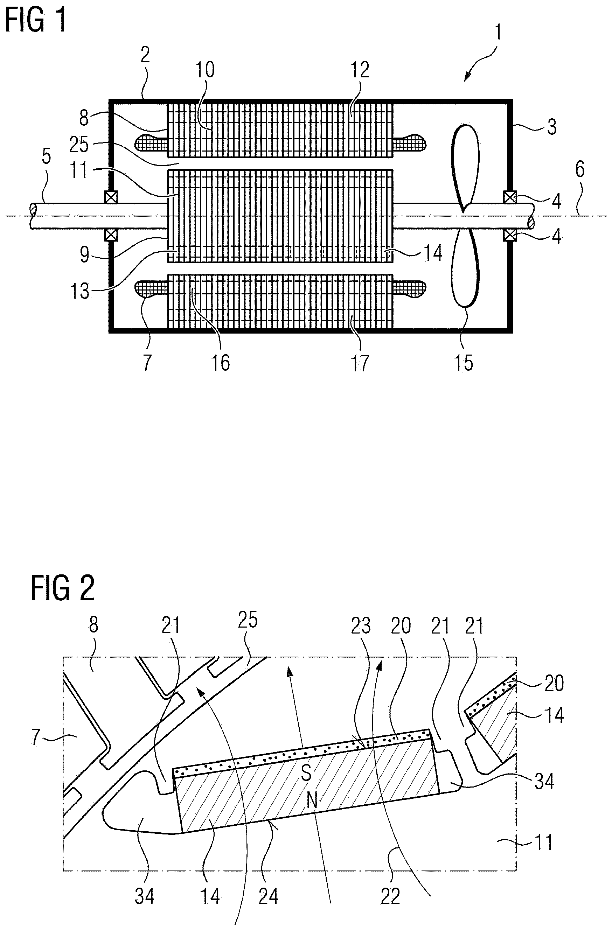

FIG 1 zeigt in einem prinzipiellen Längsschnitt eine dynamoelektrische Maschine 1, insbesondere eine permanenterregte Synchronmaschine, mit einem Stator 12 und einem Rotor 9, der drehfest mit einer Welle 5 verbunden ist. Die Welle 5 ist in Lager 4 gehalten, die in Lagerschilden positioniert sind und in einem Gehäuse 2 gehalten sind. Der Stator 12 weist in nicht näher dargestellten Nuten 16 eines Blechpakets 10 ein Wicklungssystem 7 auf, dass an den Stirnseiten des Blechpakets 10 Wickelköpfe ausbildet. Im Stator 12 verlaufen optional auch Kühlkanäle 17, um die von einem Eigenlüfter 15 generierte Luft durch die dynamoelektrische Maschine 1 leiten zu können.

Der Rotor 9 weist in dieser Ausführungsform vergrabene Permanentmagnete 14 auf, die in im Wesentlichen axial verlaufenden Ausnehmungen 13 eines Blechpakets des Rotors 9 angeordnet sind. Als vergrabene Permanentmagnete 14 werden dabei Permanentmagnete 14 betrachtet, die nicht an der Außenoberfläche 18 des Rotors 9 angeordnet sind.

Durch elektromagnetische Wechselwirkung des Rotors 9 mit einem durch das Wicklungssystem 7 bestromt Stator 12 wird der Rotor 9 um eine Achse 6 in Drehung versetzt. Der Rotor 9 ist dabei vom Stator 12 durch einen Luftspalt 25 getrennt.

Das Wicklungssystem 7 wird dabei von einem Umrichter 33 gespeist, der auch die Regelung 35 der Maschine 1 übernimmt und ggf. ergänzend deren Funktion überwacht.

FIG 2 zeigt eine Detailansicht eines Querschnitts der dynamoelektrischen Maschine 1, wobei das Wicklungssystem 7 des Stators 12 dort als verteilte Wicklung ausgeführt ist. Die Erfindung lässt sich auch bei anderen Wicklungssystemen des Stators 12, z.B. Zahnspulenwicklungen, verteilten Wicklungen, wie Einschicht-Ganzlochwicklungen, Zweischicht-Ganzlochwicklungen (gesehnt) und allgemein bei Zweischicht-Bruchlochwicklungen einsetzen. Ebenso sind die dabei eingesetzten Drahtformen (Rund- und Flachdrahtwicklungen, ebenso wie Litzenleitern) nahezu beliebig verwendbar.

Durch den Luftspalt 25 vom Stator 12 getrennt, ist der Rotor 9 mit seinen Permanentmagneten 14 angeordnet. Diese Permanentmagnete 14 sind in dieser Ausführungsform V-förmig innerhalb des Rotors 9 angeordnet. Von zwei Permanentmagneten (pro Ausnehmung 13 ein Permanentmagnet 14) wird dabei ein Pol 19 des Rotors 9 gebildet. Der Rotor 9 weist in dieser Ausführung V-förmig angeordnete Permanentmagnete 14 auf, die einen Pol 19 des Rotors 9 bilden. Die V-förmige Anordnung der Permanentmagnete 11 hat den Vorteil, dass unter anderem die Magnetfelddichte im Luftspalt 25 erhöht wird. Man spricht auch von einer Flusskonzentration.

Der Permanentmagnete 14 ist jeweils quaderförmigen ausgeführt und befindet sich in einer Ausnehmung 13. Die Ausnehmung 13 wird nur abschnittsweise vom Permanentmagneten 14 eingenommen, wobei der Permanentmagnet 14 von Flusssperren 34 flankiert ist.

Diese Flusssperren 34 weisen entweder Luft oder amagnetischen Material auf. Diese Flusssperren 34 in den Polen 19 des Rotors 9 sind notwendig, um magnetische Kurzschlüsse der Permanentmagnete 14 u.a. im Bereich der jeweiligen Pole 19 zu vermeiden.

Zwischen den Flusssperren 14 und den Permanentmagneten 14 sind Stege 15 unterschiedlicher Ausprägung vorgesehen, die auf der zum Luftspalt 25 gewandten Seite der Ausnehmung 13 angeordnet sind. Durch diese Anordnung der Stege 15 kann zusätzlich eine Entmagnetisierung der Permanentmagnete 14, insbesondere in den Randbezirken der Permanentmagnete 14 beispielsweise durch einen Stoßkurzschluss im Wicklungssystem 7 des Stators 12 überwiegend vermieden werden.

Erfindungsgemäß ist nunmehr eine Schicht 20 in den jeweiligen Magnetkreisen 22 des Rotors 9 seriell zum Permanentmagneten 14 angeordnet. Diese Schicht 20 umfängt den Permanentmagneten 14 somit zumindest soweit, dass Feldlinien des Magnetkreises 22 durch die Schicht 20 "müssen".

Mit anderen Worten die Schicht 20 liegt jeweils in der Hauptflussrichtung der dynamoelektrischen Maschine 1 bzw. des Rotors 9 (d-Achse) und in Serie zum Permanentmagneten 14.

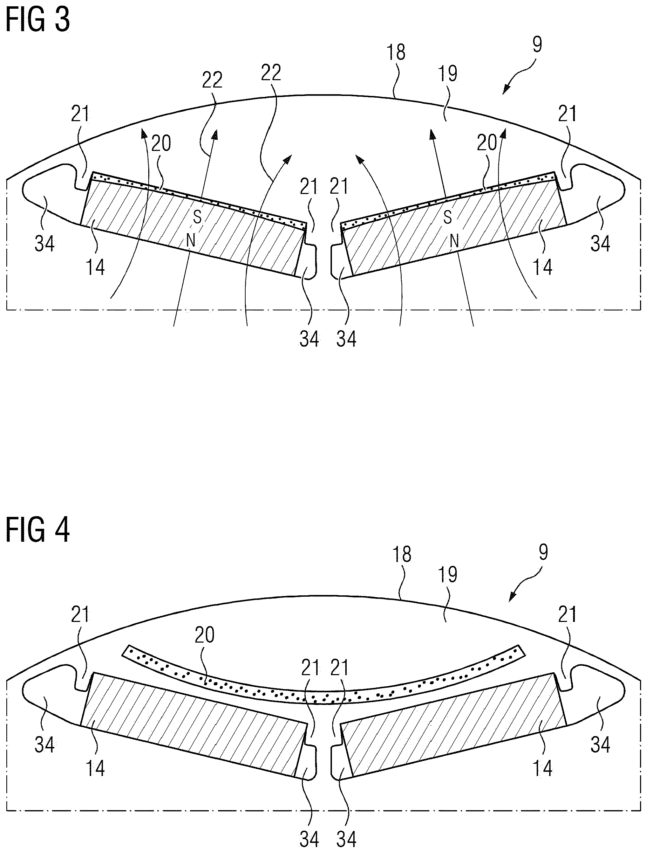

Die Schichtdicke kann variieren und ist an den Kanten des Permanentmagneten 14 tendenziell dicker (FIG 3) ausgeführt als in der Mitte des Permanentmagneten 14.

Als Material dieser Schicht 20 sei beispielhaft das Magnetisierverhalten von CeFeB genannt, welches bei einer Curie-Temperatur von ca. 150°C den Übergang zum paramagnetischen Zustand aufweist und eine maximale Gegenfeldfestigkeit (Koerzitivfeldstärke Hcj) von 50kA/m bei 20°C und 20kA/m bei 120°C aufweist.

Der Permanentmagnet 14 ist unter den normalen Betriebsbedingungen entmagnetisierungsfest ausgelegt und weist eine Curie-temperatur typischerweise >300°C auf, die damit deutlich über seiner Arbeitstemperatur liegt (z.B.: Maximale Arbeitstemperaturen (unter Belastung) sind in der Regel ~150°C). Der Permanentmagnet 14 ist aus der Materialklasse der Neodym-Eisen-Bor Magnete (NdFeB).

Durch die aktive Beeinflussung des Magnetkreises 22 auf Grundlage des Einsatzes von Materialien mit diesen speziellen Stoffeigenschaften, insbesondere der Ausnutzung der Curie-Temperatur, wird erfindungsgemäß sowohl ein reversibler Eigenschutz des Magnetkreises 22, als auch eine einfache Detektion einer Grenztemperatur der Permanentmagnete 14 geschaffen.

Diese Schicht 20 wird entweder direkt auf den Permanentmagneten 14 positioniert und bei der Montage des Permanentmagneten 14 in die Ausnehmung 13 axial gleichzeitig eingeschoben oder als eigenes Bauteil unabhängig davon separat axial eingesetzt.

Ebenso kann dieses Material einem Kleber beigemengt werden, der zur Fixierung des Permanentmagneten 14 in seiner Ausnehmung 13 vorgesehen wird. Auch damit wäre diese Schicht 20 dann in der Ausnehmung 13 und damit am Permanentmagneten 14 in der Hauptflussrichtung angeordnet.

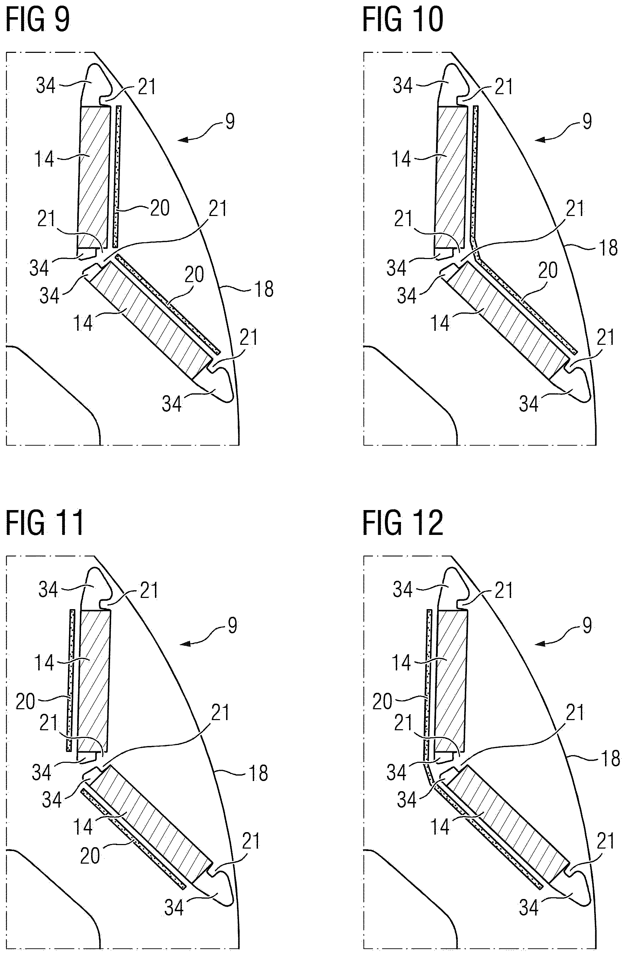

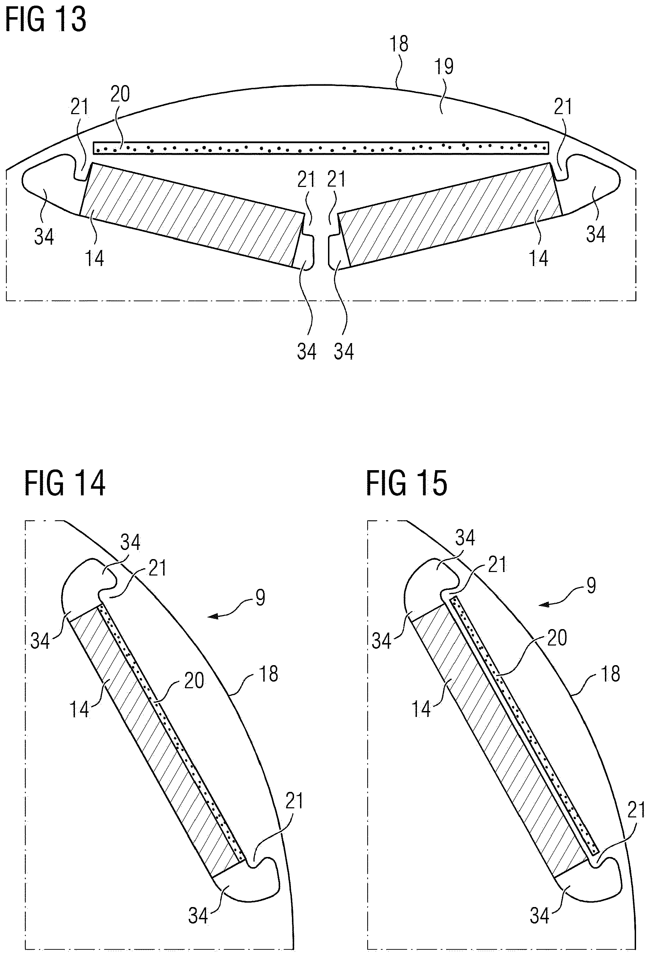

Falls diese Schicht 20 in einem eigenen axial verlaufenden Schlitz des Blechpakets 11 von der Ausnehmung 13 beabstandet vorgesehen wird, (gemäß FIG 9 bis 12, und FIG 14) kann diese Schicht 20 als formbares, plattenförmiges Element oder als Vergussmasse mit dementsprechenden Additiven ausgeführt sein.

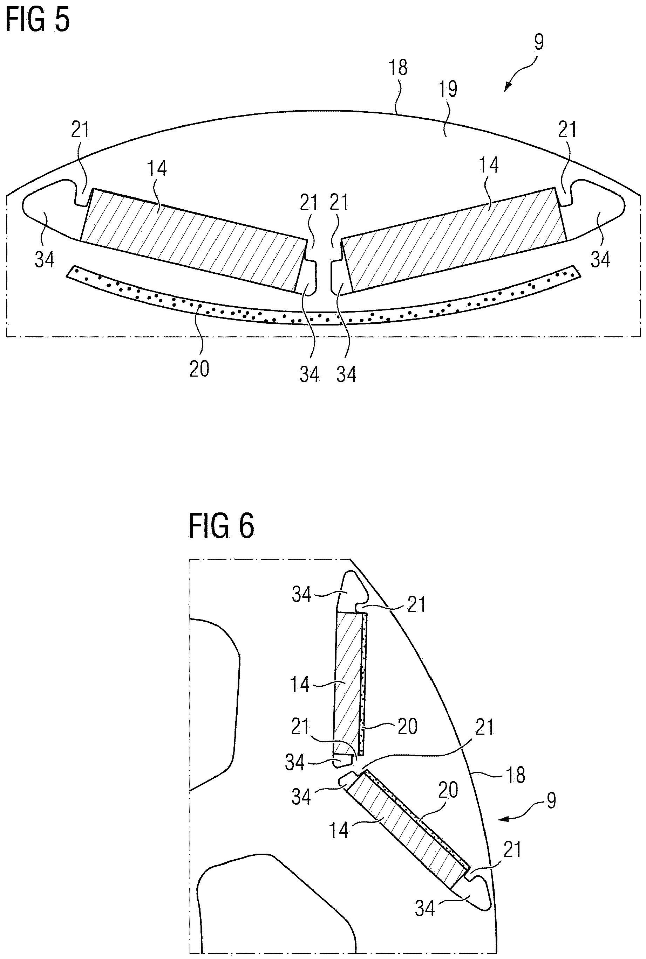

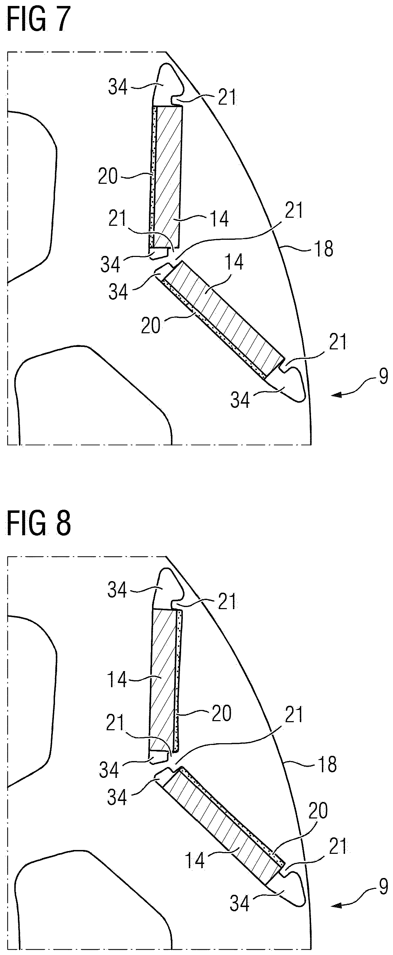

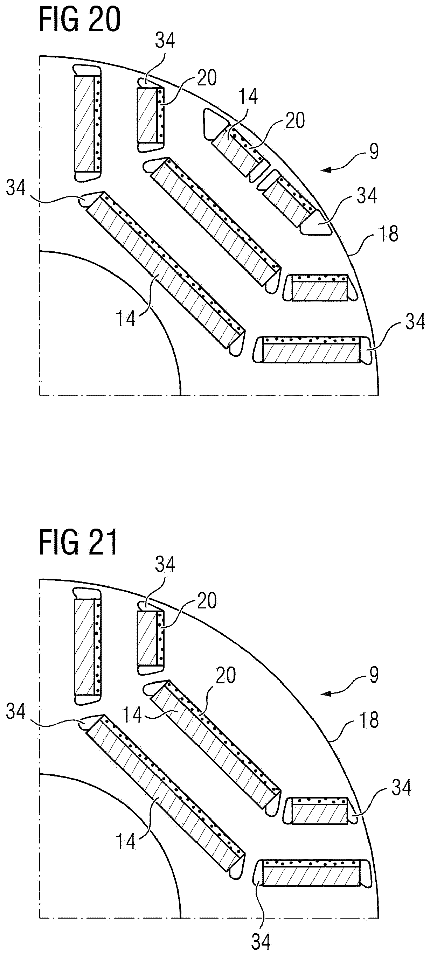

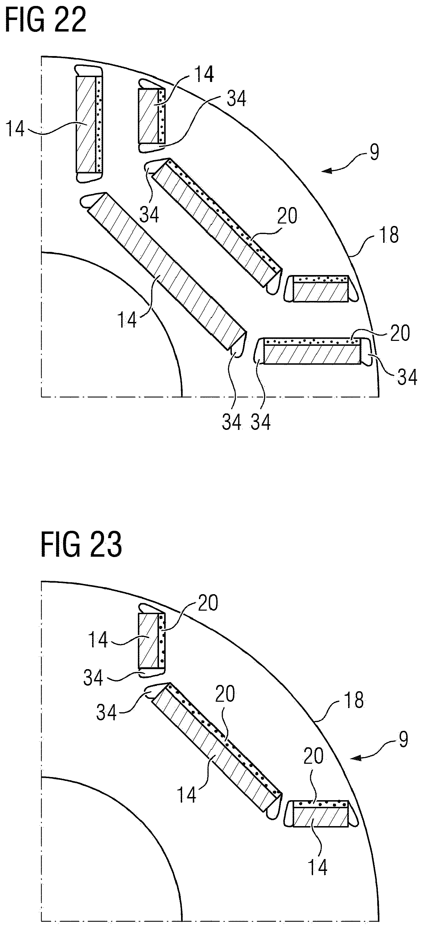

Weitere Verläufe bzw. Anordnungen der Schicht 20 innerhalb eines Poles 19 sind beispielhaft den FIG 3 bis 23 zu entnehmen.

In der Regel ist die Ausnehmung 13 etwas größer gestaltet als der Permanentmagnet 14 und ggf. deren zugehörige Schicht 20, da Platz zum Fügen des Permanentmagneten 14 berücksichtigt werden muss und/oder aufgrund fertigungsbedingter Toleranzen der beteiligten Bauteile. Ein ggf. freier Raum insbesondere zur Luftspaltseite 23 oder zur Achsseite 24 hin wird dann mit Kleber oder Vergussmasse gefüllt, bzw. kann bei anderen Befestigungsarten, wie Verklemmen oder Verstemmen auch nur Luft sein.

Neben dem Vorteil, dass diese Stege 21 bzw. Halterungen etwaigen Entmagnetisierungserscheinungen bei einem Stoßkurzschluss des Wicklungssystems 7 entgegenwirken, sind diese Stege 21 bzw. Halterungen auch zur Positionierung und Fixierung der Permanentmagnete 14 in der Ausnehmung 13 geeignet.

Nachdem in Axialrichtung betrachtet der Rotor 9 axial geschichtete Bleche aufweist, ist in einer weiteren Ausführung auch vorstellbar, dass derartige Stege 21 und Halterungen nur an jedem x-ten Blech oder wechselseitig vorhanden sind. Diese Ausgestaltung reicht eindeutig zur Positionierung der Permanentmagnete 14 und je nach dem zu erwartenden Stoßkurzschlussstrom auch gegenüber den Entmagnetisierungserscheinungen.

Die Stege 21 bzw. Halteelemente sind an der Luftspaltseite 23 der Ausnehmung 13 des Rotors 9 bzw. dem Luftspalt 25 der permanenterregten Synchronmaschine zugewandt.

Die Permanentmagnetanordnung einer Ausnehmung 13 und/oder eines Pols des Rotors 9 kann demnach einen einstückig ausgeführten Permanentmagnet 14 oder mehrere Permanentmagnete 14 aufweisen.

Die Permanentmagnete 14 mit oder ohne Schicht 20 liegen dabei an der Luftspaltseite 23 und/oder der Achsseite 24 der Ausnehmung 13 komplementär an. Mit anderen Worten, es ist ein durchgängiger Kontakt, ggf. mit einer Klebeschicht/Vergussmasse versehen, von Blechen und Permanentmagneten 14 vorhanden.

Die Pole des Rotors 9 sind, in Umfangsrichtung betrachtet bzgl. ihrer Magnetisierungsrichtung alternierend angeordnet.

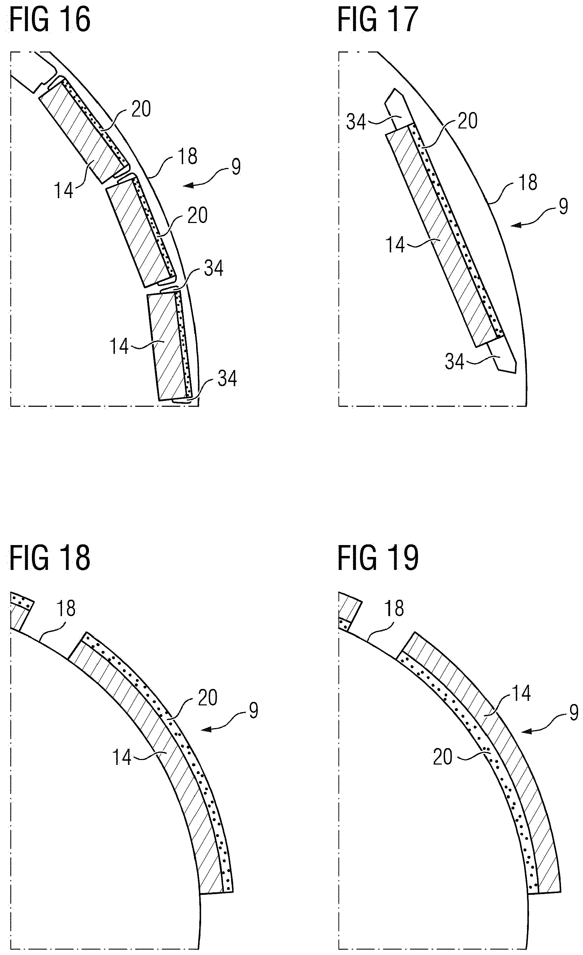

Die der Erfindung zugrundeliegende Idee lässt sich ebenso auf permanenterregte Synchronmaschinen übertragen, die Rotoren 9 mit Permanentmagneten 14 an ihrer Außenoberfläche 18 aufweisen. Dabei sind diese Schichten 20 radial unterhalb (gemäß FIG 18) oder oberhalb (gemäß FIG 17) der Permanentmagnete 14 angeordnet, mit anderen Worten zwischen Achse 6 des Rotors 9 und den jeweiligen Permanentmagneten 14 oder zwischen Permanentmagneten 14 und Luftspalt 25.

Konkret wird die Gegenfeldbelastung der Permanentmagnete 14 bei einem bestimmten Stromzustand reduziert, indem der magnetische Widerstand des Magnetkreises erhöht wird. Somit kann beispielsweise ein Motor 1 im Hinblick auf die Entmagnetisierungsfestigkeit entweder höhere Maximalströme führen oder aber bei gegebenem Maximalstrom erhöhte Magnettemperaturen zulassen.

Also wird damit eine Schutzfunktion geschaffen. Die damit verbundene Änderung von Motorparametern (z.B. Induktivität oder Leerlauf-Spannung (EMK)) ermöglicht weiterhin eine Detektion der Übertemperatur z.B. im Rotor 9 (z.B. über den Umrichter 33). Eine geeignete Detektion ist notwendig, um einen weiteren Temperaturanstieg durch geeignete Gegenmaßnahmen zu verhindern bzw. aktiv Maßnahmen zur Temperaturreduktion einzuleiten.

Mögliche Verfahren zur Detektion wären beispielsweise die Ermittlung der EMK-Spannungsamplitude während des Betriebs oder die Ermittlung der d-Induktivität durch Testpulse oder Abweichungen von einem hinterlegten Flussmodell.

Damit greift die Regelung des Antriebs ein, indem sie die einspeisende Leistung in die dynamoelektrische Maschine 1 zurücknimmt oder eine und/oder Notabschalten aufgrund einer Motorüberhitzung einleitet.

Es muss auf jeden Fall sichergestellt werden, dass der Rotortemperatur zurückgeht.

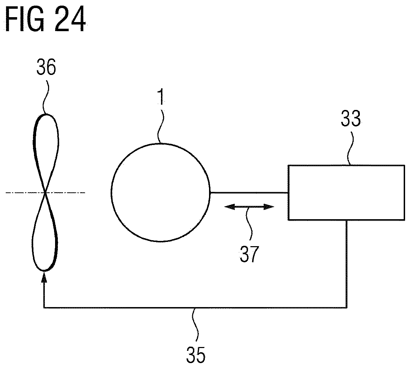

Dies kann ggf. auch durch eine forcierte Kühlung der dynamoelektrischen Maschine 1 mittels Fremdlüfter 36 durch die Regelung 35 unterstützt werden. (siehe FIG 24)

Der beschriebene Vorgang schützt zum einen direkt das Magnetmaterial, also den Permanentmagneten 14, im Rotor 9 durch Absenken des belastenden Gegenfeldes, erlaubt auf der anderen Seite über die feststellbare Beeinflussung 37 von Betriebsgrößen der Maschine 1 (z.B. des Stromes) eine Erfassung der Temperaturüberschreitung durch einen entsprechenden Detektion-Algorithmus im speisenden Umrichter 33. Dies erfolgt beispielsweise durch einfache Maßnahmen wie z.B. Überstrom-Detektion im Umrichter 33.

Derartige Rotoren 9 werden vor allem in permanenterregten Synchronmaschinen eingesetzt, die im industriellen Umfeld betrieben werden. Dabei sind sie als Antriebe von Pumpen, Lüfter, Verdichter, Kompressoren, Rollgängen, Förderanlagen vorgesehen, mit einer kontinuierlichen Betriebsdauer die den Antrieb (insbesondere Motor 1 und Umrichter 33) thermisch stark fordert und erfindungsgemäß überwacht wird. Derartige Synchronmaschinen sind auch bei Traktionsantrieben wie Miningfahrzeugen, E-Bussen, Straßenbahnen oder Zügen einsetzbar, um auch durch die Erhöhung der Gegenfeldstabilität einen zuverlässigeren Betrieb zu gewährleisten.

Die der Erfindung zugrundeliegende Idee lässt sich ebenso auf permanenterregte Synchronmaschinen mit Außenläufer übertragen, wie sie z.B. bei direkt angetriebenen Generatoren von Windkraftanlagen eingesetzt werden.

Die der Erfindung zugrundeliegende Idee lässt sich ebenso auf andere dynamoelektrische Maschinen 1 übertragen, die in ihren Rotoren 9 Permanentmagnete 14 aufweisen, also z.B. Synchronmaschinen mit einem Anlaufkäfig oder Synchron-Reluktanz-Maschinen mit Permanentmagneten 14.

## Patentansprüche

**1.** Rotor (9) einer dynamoelektrischen Maschine (1) mit Permanentmagneten (14) mit
einem magnetisch leitfähigen Grundkörper, insbesondere einem axial geschichteten Blechpaket (11), der in im Wesentlichen axial verlaufenden Ausnehmungen (13) zumindest abschnittsweise umfänglich und/oder axial Permanentmagnete (14) vorsieht, wobei ein oder mehrere Permanentmagnete (14) einen Pol (19) bilden, der einen Nordpol (N) oder Südpol (S) Richtung Außenumfang (18) des Rotors (9) ausbildet,
wobei der leitfähige Grundkörper und die jeweiligen Permanentmagnete (14) Teil jeweils eines geschlossenen Magnetkreises (22) bilden,
wobei in den Magnetkreisen (22) Mittel vorhanden sind, die in Magnetisierungsrichtung der Permanentmagnete (14) magnetisch in Serie angeordnet sind und die Permanentmagnete (14) vor Übertemperatur und damit vor irreversibler Entmagnetisierung schützen.

**2.** Rotor (9) einer dynamoelektrischen Maschine (1) mit Permanentmagneten (14) nach Anspruch 1, **dadurch ge**- **kennzeichnet**, dass jeder Pol (19) des Rotors (9) oder jeder Permanentmagnet (14) eine Schicht (20) aufweist, die eine stoffspezifische Beeinflussung des Magnetkreises (22) bei Überschreiten einer vorgebbaren Grenztemperatur bewirkt, um eine irreversible Entmagnetisierung der Permanentmagnete (14) zu vermeiden.

**3.** Rotor (9) einer dynamoelektrischen Maschine (1) mit Permanentmagneten (14) nach Anspruch 1 oder 2, **dadurch gekennzeichnet, dass** die Schicht (20) den magnetischen Pol (19) oder den Permanentmagneten (14) zumindest teilweise umfänglich umgibt.

**4.** Rotor (9) einer dynamoelektrischen Maschine (1) mit Permanentmagneten (14) nach Anspruch 3, **dadurch ge- kennzeichnet**, dass die Schicht (20) direkt an dem Permanentmagneten (14) anliegt oder davon beabstandet ist.

**5.** Rotor (9) einer dynamoelektrischen Maschine (1) mit Permanentmagneten (14) nach einem oder mehreren der vorhergehenden Ansprüche, **dadurch gekennzeichnet, dass** die Dicke der Schicht (20) und/oder der Abstand zum Permanentmagneten (14) unterschiedlich ausgeprägt ist.

**6.** Rotor (9) einer dynamoelektrischen Maschine (1) mit Permanentmagneten (14) nach einem oder mehreren der vorhergehenden Ansprüche, **dadurch gekennzeichnet, dass** die Dicke der Schicht (20) < 25 % einer Dicke des Permanentmagneten (14) in Magnetisierungsrichtung entspricht.

**7.** Rotor (9) einer dynamoelektrischen Maschine (1) mit Permanentmagneten (14) nach einem oder mehreren der vorhergehenden Ansprüche, **dadurch gekennzeichnet, dass** die Schicht (20) aus CeFeB gebildet ist.

**8.** Rotor (9) einer dynamoelektrischen Maschine (1) mit Permanentmagneten (14) nach einem oder mehreren der vorhergehenden Ansprüche, **dadurch gekennzeichnet, dass** die Permanentmagnete (14) NdFeB enthalten.

**7.** Rotor (9) einer dynamoelektrischen Maschine (1) mit Permanentmagneten (14) nach einem der vorhergehenden Ansprüche,
**dadurch gekennzeichnet, dass** die Ausnehmungen (13) eines Pols (19) des Rotors (9) insbesondere tangential oder in V-Form oder in Doppel-V-Form oder in U-Form angeordnet sind.

**8.** Rotor (9) einer dynamoelektrischen Maschine (1) mit Permanentmagneten (14), nach einem der vorhergehenden Ansprüche,
**dadurch gekennzeichnet, dass** zumindest einige Ausnehmungen (13) eines Pols (19) des Rotors (9) an der Luftspaltseite (23) der Ausnehmungen (13), axial betrachtet, zumindest abschnittsweise Stege (21) zur Erhöhung einer Gegenfeldstabilität aufweist.

**9.** Dynamoelektrische Maschine mit einem Rotor (9) mit Permanentmagneten (14) mit einem magnetisch leitfähigen Grundkörper, insbesondere einem axial geschichteten Blechpaket (11), der in im Wesentlichen axial verlaufenden Ausnehmungen (13) zumindest abschnittsweise umfänglich und/oder axial Permanentmagnete (14) vorsieht,
wobei ein oder mehrere Permanentmagnete (14) einen Pol (19) bilden, der einen Nordpol (N) oder Südpol (S) Richtung Außenumfang (18) des Rotors (9) ausbildet,
wobei der leitfähige Grundkörper und die jeweiligen Permanentmagnete (14) Teil jeweils eines geschlossenen Magnetkreises (22) bilden,
wobei in den Magnetkreisen (22) Mittel vorhanden sind, die in Magnetisierungsrichtung der Permanentmagnete (14) magnetisch in Serie angeordnet sind und die Permanentmagnete (14) vor Übertemperatur und damit vor irreversibler Entmagnetisierung schützen,
wobei der Magnetkreis (22) zumindest mit einem mittels eines Umrichters (33) bestromten Wicklungssystem (7) eines Stators (12) der dynamoelektrischen Maschine (1) und den Permanentmagneten (14) des Rotors (9) elektromagnetisch wechselwirkt.

**10.** Antrieb mit einem Umrichter (33) und einer dynamoelektrischen Maschine (1) wobei über eine dem Umrichter zugeordnete Regelung u.a. durch Monitoring der vorgebbaren Motorparameter die Grenztemperatur der Permanentmagnete (14) überwachbar ist.

**11.** Verfahren zur Erfassung einer Grenztemperatur von Permanentmagneten (14) eines mit Permanentmagneten (14) versehenen Rotors (9) einer dynamoelektrischen Maschine (1), insbesondere einer permanenterregten Synchronmaschine, die mittels eines Umrichters (33) angetrieben wird, durch zumindest einen die folgenden Schritte:
- Erfassen einer Änderung der EMK, oder
- Erfassen der Änderung der Induktivitäten (dL/dt) der dynamoelektrischen Maschine (1) durch ein geeignetes Verfahren, oder
- Erfassen des Unterschiedes zwischen erfasster Induktivität und im Umrichter (33) hinterlegten Induktivität der dynamoelektrischen Maschine (1),
- um dann aus einem oder mehreren der aufgeführten Schritte daraus weiterer temperaturreduzierende Aktionen, wie Stromreduktion, Lastreduktion oder Notabschalten der dynamoelektrischen Maschine (1) und/oder Zuschalten eines Fremdlüfters (36) einzuleiten.

**12.** Förderanlage, Kompressor, Verdichter oder Traktionsantrieb mit zumindest einem Antrieb nach Anspruch 10.
